# EUROPÄISCHE PATENTSCHRIFT

(11) **EP 0 724 923 B1**
(45) Veröffentlichungstag und Bekanntmachung des Hinweises auf die Patenterteilung: **27.01.1999**
(21) Anmeldenummer: 94119274.2
(22) Anmeldetag: 07.12.1994
(51) Int. Cl.: B22D 11/126, B23K 37/08

(54) **Stahlstranggiessanlage mit Entbarter für Brennbärte an den Unterkanten der Trennflächen an Stranggussstücken**
Continuous casting installation for steel with burr remover for the burr at the lower part of the parting face of a continuous cast piece
Installation de coulée continue d'acier avec un machine d'ébavurage pour les bavures à la partie inférieure d'une face de séparation d'une pièce coulée continue

(43) Veröffentlichungstag der Anmeldung: 07.08.1996
(73) Patentinhaber: Horst K. Lotz Feuerschutzbaustoffe, D-65719 Hofheim-Wallau (DE)
(72) Erfinder: Lotz, Horst K., D-65719 Hofheim-Wallau (DE)

(56) Entgegenhaltungen:
- EP-A- 0 240 130

## Beschreibung

Üblicherweise werden die in Stahlstranggießanlagen am laufenden Band gegossenen Stränge durch Sauerstoff-Brennschneidmaschinen in Strangstücke (1) unterteilt. Beim Brennschneiden entstehen an den Unterkanten der Trennflächen Brennbärte (2) aus Eisenoxiden, die nach und nach in einen Verbindungssteg aus reinem Stahl übergehen.

Diese Brennbärte (2) stellen bei der Weiterverarbeitung durch Einwalzen oder Abfallen in Glühöfen oder durch Abfallen bzw. Einwalzen beim Überlaufen von Rollen (3) eines Rollganges qualitätsmindernde und kostenverursachende Störquellen dar. Daher versucht man, sie möglichst früh im Fabrikationsablauf zu entfernen, durch gasetechnische und mechanische Maßnahmen.

Vorzugsweise entfernt man diese Brennbärte (2) mechanisch, wozu in der EPA 93113128.8 ein vorteilhafter Vorschlag gemacht wurde. Jedoch ist diese Möglichkeit auf Umstände beschränkt, in denen ein Hin- und Herfahren der Strangstücke (1) zum Entbarten an beiden brenngeschnittenen Enden durchgeführt werden kann.

Die hier vorgestellte Erfindung erlaubt es jedoch, das oben aufgeführte Prinzip nach der EPA 93113128.8 in einer Rollgangslücke direkt nach dem Brennschneidende entweder mitlaufend und überholend den vorderen, und stehend oder gegenlaufend den hinteren Brennbart (2) am fortlaufend bewegten Strangstück (1) zu entfernen und das sicher, leise und wirkungsvoll bei geringstem Aufwand. Dazu wird nach jedem Entbartungsvorgang der Kolbenkörper (7) zum Abwerfen von abgefallenen Brennbärten (2) zu einer Rinne (4) und zum Abstandhalten von der Unterfläche des Strangstückes (1) um ca. 60° bis 90° gedreht.

Erfindungsgemäß besteht ein solcher Entbarter, wie in den **Bildern 1 bis 2** dargestellt, aus einem Entbarterwagen (5), der aus einem Träger (12) und zwei Wangen (13) zusammengeschweißt ist. Außen an den Wangen (13) sind 3 oder 4 glatte Laufräder (15) ohne Führungsflansche in Laufradlagern (16) angebracht, die auf einer Unterschiene (22) laufen und von einer Oberschiene (23) am Hochgehen bei einem Kippvorgang gehindert werden. Ebenfalls außen an den Wangen (13) sitzen in Ritzellagern (18) zwei Ritzel (17), die mit Zahnstangen (25), die auch als Führungsschienen (25) dienen, kämmen. Die Ritzel (17) sind von zwei Antrieben innerhalb der Wangen (13), die aus Getriebe (19) mit die Wangen (13) durchdringenden Wellen und Elektromotoren (20), die elektrische Bremsen haben, bestehen. Die miteinander fluchtenden Elektromotore (20) haben je ein zweites Wellenende und sind mit einer Kupplung (21) zur Erzeugung eines absoluten Gleichlaufes verbunden. Ebenfalls an den Außenseiten der Wangen (13) befinden sich Führungsleisten (14) aus gleitgünstigem Material, die an den glattgearbeiteten Seiten der Zahnstangen (25) auch als Führungsschiene (25) dienend, den Entbarterwagen (5) führend entlanggleiten. Auf dem Träger (12) des Entbarterwagens (5) befinden sich zwei Drehlager (11), in denen sich der Kolbenkörper (7) mit seinen eindrückbaren Scherkolben (6) an seinen für das Drehlager (11) gearbeiteten Deckeln (8) drehen kann. Auf den Stirnflächen der Deckel (8) sind normalerweise waagerecht stehende Gleitstücke (9) angebracht, die auf den Gleitschienen (24) an der Oberkante der Oberschiene (23) entlanggleiten und die Scherkolben (6) im Kolbenkörper (7) in senkrechter Lage halten. Wird ein kleiner Winkel zwischen Unterfläche des Strangstückes (1) und Scherkolben (6) vorgesehen, so ist dieser leicht durch einen Spalt zwischen den Gleitstücken (9) und den Gleitschienen (24) zum selbsttätigen Einstellen zu erzeugen. An den Endstellungen der Schienen sind die Gleitschienen (24) für ein Drehen der Gleitstücke (9) mit Kolbenkörper (7) zurückgeschnitten und ein Drehpuffer (26) mit angeschrägtem Anlauf zwingt den durch den Entbarterwagen (5) gerade noch verfahrenden Kolbenkörper (7) an den Drehknöpfen (10), sich um eine durch die Konstruktion vorgegebene Gradzahl zu drehen. Beim Verfahren aus der Endstellung zwingt die Gleitschiene (24) über die Gleitstücke (9) die Kolbenkörper (7), wieder gerade oder nahezu gerade zu werden.

Ein Arbeitszyklus für 2 Entbartungen mit diesem Entbarter ginge wie folgt vor sich:

Mittels eines Stellungsgebers z. B. Lichtschranke wird der sich unter dem ankommenden Strangstück (1) befindliche Entbarter auf Mitlauf geschaltet, und der Antrieb verfährt diesen bei gleichzeitigem Hochdrehen des Kolbenkörpers (7) und Eindrücken der Scherkolben (6) durch die Unterfläche des Strangstückes (1). Danach wird eine höhere Geschwindigkeit eingeschaltet, die Scherkolben (6) überholen entbartend das vordere Ende des Strangstückes (1), springen waagerechte Bartreste abschlagend hoch und werden in der anderen Endstellung reinigend und den Weg für das Strangstück (1) freimachend abgedreht. Vor dem Überlauf durch das hintere Ende des Strangstückes (1) wird entsprechend ausgelöst der Entbarter wieder angefahren, dreht den Kolbenkörper (7) nach oben, drückt mit dem Scherkolben (6) gegen die Unterflächen, kippt in den kleinen Scherwinkel und entbartet stillstehend oder gegenlaufend den Brennbart (2) am hinteren Ende des Strangstückes (1). Danach läuft der Entbarter in die Ausgangsstellung zum Abdrehen weiter und erwartet hier das nächste Strangstück (1).

### Legende

- 1: Strangstück
- 2: Brennbart
- 3: Rolle
- 4: Rinne
- 5: Entbarterwagen
- 6: Scherkolben
- 7: Kolbenkörper
- 8: Deckel
- 9: Gleitstück
- 10: Drehknopf
- 11: Drehlager
- 12: Träger
- 13: Wange
- 14: Führungsleiste
- 15: Laufrad
- 16: Laufradlager
- 17: Ritzel
- 18: Ritzellager
- 19: Getriebe
- 20: Elektromotor
- 21: Kupplung
- 22: Unterschiene
- 23: Oberschiene
- 24: Gleitschiene
- 25: Zahnstange, Führungsschiene
- 26: Drehpuffer

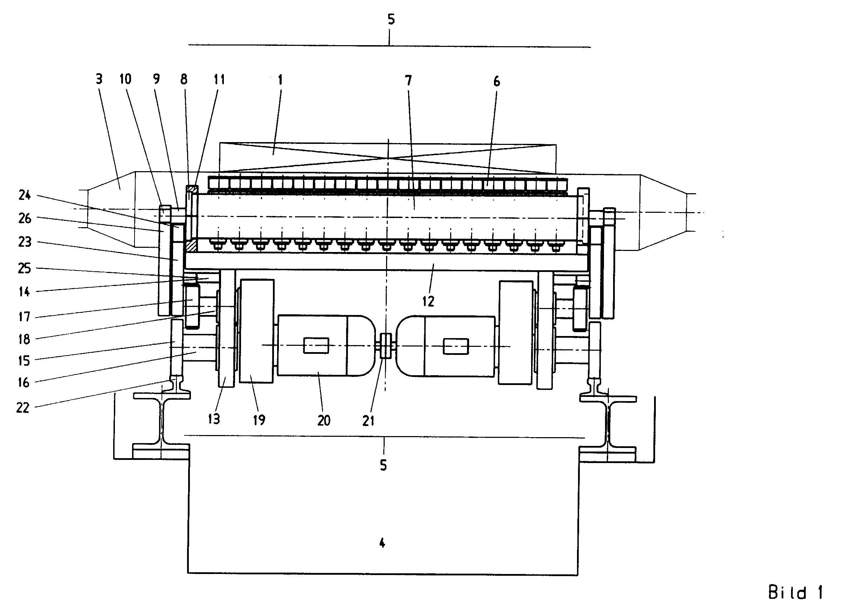

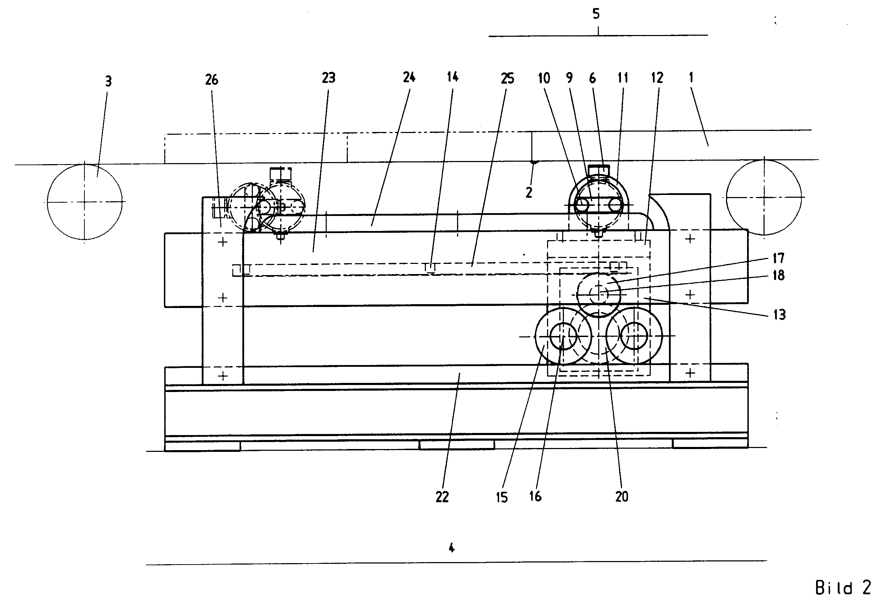

## Patentansprüche

1. Entbarter für Stahlstranggießanlage zum Entfernen von Brennbärten (2) an den Unterkanten der Trennflächen an Strangstücken (1), dadurch gekennzeichnet, daß ein die elastisch eindrückbaren, am Kopf verzahnten Scherkolben (6) tragender Kolbenkörper (7) drehbar auf einem 3- oder 4rädrigen Entbarterwagen (5) gelagert ist, der auf beiden Seiten in einem Schienensystem mit Ober- und Unterschiene (23, 22) für die Laufräder (15), einer Gleitschiene (24) an der Oberseite der Oberschiene (23) für die Kolbenkörperlage, einer Führungsschiene (25) an der Ober- oder Unterschienen-Innenseite (23,22) für die Wagenführung und dazu eine Zahnstange (25) für den Wagenantrieb mittels Ritzel (17), Getriebe (19) und geschwindigkeitsregelbarem Drehstrommotor (20) läuft, wobei der drehbare Kolbenkörper (7) an beiden Endseiten Gleitstücke (9) besitzt, die auf den Gleitschienen (24) verschiebend die Drehung des Kolbenkörpers (7) verhindern oder verringern, bis Drehpuffer (26) mit schrägen Anlaufflächen an den Enden des Schienensystems die Drehknöpfe (10) an den Gleitstücken (9) den Kolbenkörper (7) aus der waagerechten in eine senkrechte Lage drehen, wozu die Gleitschiene (24) zurückgeschnitten ist.

2. Entbarter für Stahlstranggießanlage zum Entfernen von Brennbärten (2) an den Unterkanten der Trennflächen an Strangstücken (1) nach Anspruch 1, dadurch gekennzeichnet, daß der Entbarterwagen (5) aus zwei schweren plattenförmigen Wangen (13) mit Laufradlagern (16) für Laufräder (15) und Führungsleisten (14) sowie einem schweren plattenförmigen Träger (12) zwischen den Wangen (13) zur Aufnahme der Drehlager (11) für den Kolbenkörper (7) besteht.

3. Entbarter für Stahlstranggießanlage zum Entfernen von Brennbärten (2) an den Unterkanten der Trennflächen an Strangstücken (1) nach einem der Ansprüche 1 bis 2, dadurch gekennzeichnet, daß sich innerhalb der Wangen (13) des Entbarterwagens (5) zwei symetrisch und fluchtend angeordnete Antriebe aus Ritzeln (17) und Ritzellagern (18), Getriebe (19) und Elektromotoren (20) mit eingebauten Bremsen bestehend befinden, und die zweiten hinteren Wellenenden der Elektromotoren (20) durch eine Kupplung (21) verbunden sind.

4. Entbarter für Stahlstranggießanlage zum Entfernen von Brennbärten (2) an den Unterkanten der Trennflächen an Strangstücken (1) nach einem der Ansprüche 1 bis 3, dadurch gekennzeichnet, daß sich an den Außenseiten der Wangen (13) des Entbarterwagens (5) gleitfähige Führungsleisten (14) und an den Innenseiten der Oberschienen (23) Führungsschienen (25) befinden, wobei die letzten gleichzeitig als Zahnstangen (25) ausgebildet sind.

## Claims

1. Continuous steel casting installation with burr remover for the burr (2) at the lower part of the cut face of a continuous cast piece (1) defined by that a pivotable piston body (7) carrying the elastically descending, on top toothed deburring pistons (6), is installed on a 3 or 4-wheeled deburring carriage (5) which runs on both sides on a rail system with upper and lower rail (23, 22) for the travelling wheels (15), a slide rail (24) on the upper side of the upper rail (23) for the piston body position, a guide rail (25) on the inside of the upper or lower rail (23, 22) for the carriage guidance and a rack (25) for the carriage drive by pinion (17), gear box (19) and speed-adjustable three-phase current electrical motor (20). Whereby the rotatable piston body (7) has sliding arms (9) on both ends which prevent or reduce the rotation of the piston body (7) by displacement on the slide rails (24) until rotating buffers (26) with inclined stop faces at the ends of the rail system turn the piston body (7) from the horizontal in a vertical position by the help of rotating knobs (10) at the sliding arms (9), therefore the slide rail (24) is cut back accordingly.

2. Continuous steel casting installation with burr remover for the burr (2) at the lower part of the cut face of a continuous cast piece (1) according to claim 1 defined by that the deburring carriage (5) consists of two heavy, plate-shaped cheeks (13) with wheel bearings (16) for travelling wheels (15) and guide strips (14) as well as of a heavy plate-shaped girder (12) between the cheeks (13) for reception of the pivot bearings (11) of the piston body (7).

3. Continuous steel casting installation with burr remover for the burr (2) at the lower part of the cut face of a continuous cast piece (1) according to one of the claims 1 to 2, defined by that two symmetrically aligned drives consisting of pinions (17) and pinion bearings (18), gear boxes (19) and current electrical motors (20) with integrated brakes are placed inside the cheeks (13) of the deburring carriage (5) and by that the two backward shaft ends of the electrical motors are connected by a clutch (21).

4. Continuous steel casting installation with burr remover for the burr (2) at the lower part of the cut face of a continuous cast piece (1) according to one of the claims 1 to 3, defined by that slideable guide strips (14) are arranged on the outside of the cheeks (13) of the deburring carriage (5) and guide rails (25) on the inside of the upper rails (23), the guide rails (25) being at the same time designed as racks (25).

## Revendications

1. Ebavureur pour installation de coulée continue d'acier destiné à l'élimination de bavures d'oxycoupage (2) présentes sous l'arête inférieure des surfaces de coupe des pièces coulées (1), caractérisé en ce qu'une poutre à pistons (7) servant de réception aux pistons d'ébavurage (6), à tête dentelée et comprimables élastiquement, est logée en pivot sur un chariot d'ébavurage (5) à 3 ou 4 roues, lequel est conduit de chaque côté dans un système de rails constitué de rails supérieur et inférieur (22, 23) pour les roues porteuses (15), d'une glissière (24) au dessus du rail supérieur (23) pour la position de la poutre à piston, d'un rail de guidage (25) sur la face interne du rail supérieur ou inférieur (23, 22) pour le guidage du chariot et enfin d'une crémaillère (25) pour l'entraînement du chariot, entraînement réalisé au moyen d'un ensemble pignon (17), réducteur (19) et moteur (20) à courant triphasé réglabe en vitesse; et où la poutre à piston (7) pivotable est équipée à chaque extrémité de patins (9) qui, lors de leur déplacement au sein de la glissière (24), empèchent la rotation de la poutre à pistons (7) ou la provoquent sous l'action de butées de rotation (26) constituées de surfaces d'attaque inclinées, ménagées à chaque extrémité du système de guidage, et qui orientent les tenons de rotation (10) des patins (9) de la poutre à piston (7) depuis une position horizontale vers une position verticale à l'endroit où la glissière est ajourée à cet effet.

2. Ebavureur pour installation de coulée continue d'acier destiné à l'élimination de bavures d'oxycoupage (2) présentes sous l'arête inférieure des surfaces de coupe des pièces coulées (1) selon la revendication 1, caractérisé en ce que le chariot d'ébavurage (5) se compose de deux flancs robustes (13) avec les paliers (16) de roues porteuses (15) et les barres de guidage (14) et d'une traverse (12) plane entre les deux flancs (13) servant de réception aux paliers de pivot (11) de la poutre à piston (7).

3. Ebavureur pour installation de coulée continue d'acier destiné à l'élimination de bavures d'oxycoupage (2) présentes sous l'arête inférieure des surfaces de coupe des pièces coulées (1) selon l'une des revendications 1 à 2, caractérisé en ce que deux entraînements alignés et symétriques, chacun composé d'un pignon (17), d'un palier de pignon (18), d'un réducteur (19) et d'un moteur électrique (20) avec frein intégré sont installé entre les deux flancs et que les deux bouts d'arbre intérieurs des moteurs électriques (20) sont liés par un accouplement (21).

4. Ebavureur pour installation de coulée continue d'acier destiné à l'élimination de bavures d'oxycoupage (2) présentes sous l'arête inférieure des surfaces de coupe des pièces coulées (1) selon l'une des revendications 1 à 3, caractérisé en ce que des barres de guidage (14) coulissantes se trouvent sur les faces extérieures des flancs (13) du chariot d'ébavurage (5) et que des rails de guidage (25) se trouvent sur la face intérieure des rails supérieurs (23), ces rails de guidage (25) étant en même temps pourvus d'une crémaillère.
